# EUROPÄISCHE PATENTANMELDUNG

(11) **EP 3 566 920 A1**
(43) Veröffentlichungstag der Anmeldung: **13.11.2019**
(21) Anmeldenummer: 19164814.6
(22) Anmeldetag: 25.03.2019
(51) Int. Cl.: B60W 30/188, F02D 29/04, F02D 41/00, F02D 41/02, A01B 67/00, F02D 31/00, F02D 41/14

(54) **LANDWIRTSCHAFTLICHE ARBEITSMASCHINE SOWIE VERFAHREN ZUM BETREIBEN EINER LANDWIRTSCHAFTLICHEN ARBEITSMASCHINE**

(30) Priorität: 08.05.2018 DE 102018111022
(71) Anmelder: CLAAS Tractor S.A.S., 78141 Vélizy-Villacoublay Cedex (FR)
(72) Erfinder: Schütte, Robin, 33142 Weine (DE)
(74) Vertreter: CLAAS Gruppe

(57) **Zusammenfassung**

Die vorliegende Erfindung betrifft eine landwirtschaftliche Arbeitsmaschine (1), insbesondere Traktor, mit einem Antriebsstrang, umfassend einen drehzahlgeregelten Antriebsmotor (2), wenigstens ein Getriebe (4) sowie zumindest eine Antriebsachse und zumindest eine Nebenabtriebswelle (9), zum Betreiben der Arbeitsmaschine (1) und zumindest eines Arbeitsaggregates (15) zur Durchführung oder Unterstützung landwirtschaftlicher Arbeitsvorgänge oder Prozesse, sowie einem Motorsteuergerät (3) zur Regelung von Betriebsparametern des Antriebsmotors (2),wobei die landwirtschaftliche Arbeitsmaschine (1) eine mit dem Motorsteuergerät (3) verbundene übergeordnete Kontrollvorrichtung (16) aufweist, welche derart ausgebildet und eingerichtet ist, um mittels der Kontrollvorrichtung (16) einen Betriebszustand der Arbeitsmaschine (1), welcher eine sprunghafte Erhöhung der Motorlast bedingt, im Voraus zu erkennen und/oder auszulösen und in Abhängigkeit eines Last-Schwellwertes eine betriebszustandsspezifische Zeitverzögerung zu bestimmen, und jeweils rechtzeitig ein Steuersignal zur entsprechenden Ladedruckerhöhung an das Motorsteuergerät (3) zu geben.

## Beschreibung

Die vorliegende Erfindung betrifft eine landwirtschaftliche Arbeitsmaschine gemäß dem Oberbegriff des Anspruches 1 sowie ein Verfahren zum Betreiben einer landwirtschaftlichen Arbeitsmaschine gemäß dem Oberbegriff des Anspruches 10.

Antriebsmotoren von landwirtschaftlichen Arbeitsmaschinen, insbesondere von Traktoren werden im Allgemeinen drehzahlgeregelt betrieben. Einem Motorsteuergerät wird zur Ansteuerung des Antriebsmotors eine Solldrehzahl in Abhängigkeit vom Betriebszustand und von Bedienereingaben vorgegeben. Aufgrund von Änderungen des Betriebszustands ändern sich an einer Antriebsachse sowie an einer Nebenabtriebswelle angreifende Lasten und damit das Drehmoment an der Kurbelwelle des Antriebsmotors mitunter dynamisch. Als ein typisches Beispiel kann das Absenken und Einziehen eines Pfluges in den Boden genannt werden. Diese dynamischen Lasten können als Störgröße für den Drehzahlregelkreis des Motorsteuergeräts interpretiert werden, da der Antriebsmotor schlagartig, d.h. sprunghaft, ein höheres Drehmoment bereitstellen muss, um die Drehzahl zu halten.

Das abgebbare Motordrehmoment wird bei als Dieselmotoren ausgebildeten Antriebsmotoren durch die so genannte Rauchgrenze und damit durch den Ladedruck des Antriebsmotors begrenzt. Die Rauchgrenze bei Dieselmotoren ist der Beginn der rauchenden Verbrennung, die auftritt, wenn mehr Kraftstoff eingespritzt wird als mit der im Brennraum vorhandenen Luft verbrannt werden kann bzw. das Luft-Kraftstoffverhältnis zu gering wird. Es muss daher erst Ladedruck aufgebaut werden, um das maximale Motormoment bereitstellen zu können. Der Aufbau des Ladedrucks wird bei modernen Dieselmotoren mittels Turboladern aktiv geregelt. Dennoch ist der Aufbau des Ladedrucks ein langsam ablaufender Prozess und stellt somit die größte Einschränkung im Drehzahlregelkreis dar, insbesondere da erst eine Drehzahldifferenz vorliegen muss, bevor das Motorsteuergerät aktiv die Ladedruckerhöhung einleiten kann. Dies hat letztendlich zur Folge, dass bei einer sprunghaften Lastaufprägung am drehzahlgeregelten Antriebsmotor die Drehzahl stark einbricht oder der Antriebsmotor gar abgewürgt wird.

Aus dem Stand der Technik sind Systeme zur rechtzeitigen Drehmomentsteigerung eines Antriebsmotors bekannt. So ist beispielsweise aus der EP 3 081 793 A1 ein System zur Einstellung eines erhöhten Motormomentes bekannt, bei dem ein zukünftiger, fahrzeugintern verursachter, Anstieg der Last bei einem Schaltvorgang oder einer Drehzahländerung eines Nebenabtriebs, bekannt ist. Eine Erhöhung des Motordrehmomentes erfolgt dabei zunächst durch eine Erhöhung der an den Antriebsmotor zu liefernden Luftmenge zu einem ersten Zeitpunkt und eine verzögerte Erhöhung der Kraftstoffmenge des Motors zu einem späteren zweiten Zeitpunkt. Hierdurch sollen Schaltvorgänge eines Getriebes bei einer Beschleunigung oder Verzögerung des Fahrzeuges verbessert werden. Weiterhin beschreibt die EP 3 081 793 A1 die kurzzeitige Bereitstellung eines Drehmoment-Boosts, einer kurzzeitigen, sprunghaften Drehmomenterhöhung, welche bei einem einzelnen Schaltvorgang einen Drehmomentanstieg zumindest teilweise ausgleichen soll. Nachteilig ist hierbei jedoch, dass besonders eine genaue zeitliche Abstimmung der Drehmomenterhöhung bei Lasterhöhungen aufgrund äußerer Einflüsse schwierig ist.

Aufgabe der vorliegenden Erfindung ist es, die Nachteile des Standes der Technik zu vermeiden, insbesondere das Betriebsverhalten eines Antriebsmotors einer landwirtschaftlichen Arbeitsmaschine zu verbessern.

Diese Aufgabe wird erfindungsgemäß durch eine landwirtschaftliche Arbeitsmaschine gemäß den Merkmalen des Anspruches 1 gelöst. Weiterhin wird die Aufgabe durch ein Verfahren zum Betreiben einer landwirtschaftlichen Arbeitsmaschine mit den Merkmalen des unabhängigen Anspruches 10 gelöst.

Vorteilhafte Weiterbildungen sind Gegenstand der jeweiligen Unteransprüche.

Gemäß dem Anspruch 1 wird eine landwirtschaftliche Arbeitsmaschine, insbesondere ein Traktor, mit einem Antriebsstrang zum Betreiben der Arbeitsmaschine und zumindest eines Arbeitsaggregates zur Durchführung oder Unterstützung landwirtschaftlicherArbeitsvorgänge oder Prozesse sowie einem Motorsteuergerät zur Regelung von Betriebsparametern des Antriebsmotors vorgeschlagen. Der Antriebsstrang umfasst einen drehzahlgeregelten Antriebsmotor, wenigstens ein Getriebe, sowie zumindest eine Antriebsachse und zumindest eine Nebenabtriebswelle. Der Begriff Arbeitsaggregate umfasst dabei unmittelbar triebliche mit dem Antriebsstrang verbundene Vorrichtungen, wie beispielsweise eine Dreschvorrichtung einer als Mähdreschers ausgeführten Arbeitsmaschine oder eine Häckselvorrichtung einer als Feldhäcksler ausgeführten Arbeitsmaschine, als auch durch die zumindest eine Nebenabtriebswelle mittelbar mit dem Antriebsstrang verbundene Vorrichtungen, wie Bodenbearbeitungsgeräte, gezogene Erntegutbearbeitungsgeräte und dergleichen. Zur Verbesserung des Betriebsverhaltens des Antriebsmotors ist erfindungsgemäß vorgesehen, dass die landwirtschaftliche Arbeitsmaschine eine mit dem Motorsteuergerät verbundene übergeordnete Kontrollvorrichtung aufweist, welche derart ausgebildet und eingerichtet ist, um durch die Kontrollvorrichtung einen Betriebszustand der Arbeitsmaschine, welcher eine sprunghafte Erhöhung der Motorlast bedingt, im Voraus zu erkennen und/oder auszulösen, und in Abhängigkeit eines Last-Schwellwertes eine betriebszustandsspezifische Zeitverzögerung zu bestimmen, und jeweils rechtzeitig, d.h. zu einem der durch die Kontrollvorrichtung bestimmten betriebszustandsspezifischen Zeitverzögerung vorauseilenden Zeitpunkt, ein Steuersignal zur entsprechenden Ladedruckerhöhung an das Motorsteuergerät zu geben. Die Ansteuerung der Motorsteuereinheit zur Erhöhung des Ladedrucks durch die übergeordnete Kontrollvorrichtung ermöglicht eine verbesserte zeitliche Abstimmung der Motoransteuerung, da die übergeordnete Kontrollvorrichtung Betriebszustände, welche eine Laständerung an dem Antriebsmotor bewirken, vorausschauender erkennen kann als das Motorsteuergerät. Dies hat den Vorteil, dass dadurch ein stabileres Motordrehzahlregelverhalten und ein verbessertes Ansprechverhalten des Antriebsmotors ermöglicht werden kann. Die übergeordnete Kontrollvorrichtung ermöglicht es, dem Motorsteuergerät mitzuteilen, dass eine rapide Lastzunahme unmittelbar bevor steht. Dabei wird durch die Bestimmung der betriebszustandsspezifischen Zeitverzögerung die Zeitspanne berücksichtigt, nach der es zu einer sprunghaften Laständerung durch ein auslösendes Ereignis kommt. Eine betriebszustandsspezifische Zeitverzögerung kann dabei jeweils von einer Mehrzahl verschiedener Parametern abhängig sein. Dies ermöglicht es dem Motorsteuergerät frühzeitig den Ladedruck zu erhöhen, damit die Reaktion auf den Lastsprung mit einer geringeren oder keiner Rauchlimitierung ausgeführt werden kann. Das Vorsehen eines Last-Schwellwertes dient zur Vermeidung, dass jede unspezifische, geringe Laständerung dazu führt, dass dem Motorsteuergerät durch die Kontrollvorrichtung ein Steuersignal übermittelt wird.

Dabei kann zur Verbindung des Motorsteuergerätes mit der übergeordneten Kontrollvorrichtung eine Kommunikationsschnittstelle vorgesehen sein. Die Kommunikationsschnittstelle als eine separate Vorrichtung ausgebildet sein, die an ein der Kommunikation dienendes Bussystem der Arbeitsmaschine angeschlossen ist. Denkbar ist auch, dass die Kommunikationsschnittstelle als eine Komponente der übergeordneten Kontrollvorrichtung oder des Motorsteuergerätes ausgebildet ist. Die Kommunikationsschnittstelle dient dazu, das von der übergeordneten Kontrollvorrichtung empfangene Steuersignal dem Motorsteuergerät bereitzustellen.

Bevorzugt kann die Kontrollvorrichtung dazu eingerichtet sein, ein an die Kontrollvorrichtung übermitteltes Signal, welches der Ansteuerung eines Arbeitsaggregates zur Ausführung eines Arbeitsvorganges oder Prozesses als ein auslösendes Ereignis dient, zur Generierung des zu übermittelnden Steuersignals an das Motorsteuergerät zu verwenden. Eine Ansteuerung eines Arbeitsaggregates umfasst beispielsweise dessen Inbetriebnahme. Hierfür beispielhaft sei das Einschalten eines Dreschwerks oder einer Häckselvorrichtung eines Mähdreschers respektive eines Feldhäckslers zu Beginn eines Erntevorgangs genannt. Ein weiteres Beispiel ist das Anheben oder Absenken eines Bodenbearbeitungsgerätes wie eines Pflugs unter anderem beim Erreichen eines Vorgewendes. Auch die Inbetriebnahme einer als Front- oder Heckzapfwelle ausgeführten Nebenabtriebswelle kann zu einem Betriebszustand führen, der eine sprunghafte Erhöhung der Motorlast bedingt.

Weiterhin kann die Kontrollvorrichtung dazu eingerichtet sein, ein an die Kontrollvorrichtung übermitteltes Signal, welches der Ansteuerung eines Nebenverbrauchers der Arbeitsmaschine dient, zur Generierung und anschließenden Übermittlung des Steuersignals an das Motorsteuergerät zu verwenden. Nebenverbraucher sind insbesondere hydromechanische Antriebseinheiten, welche dem Betreiben eines hydrostatischen Fahrantriebs oder dem Betreiben von Anbaugeräten dienen.

Insbesondere kann das an die Kontrollvorrichtung übermittelte Signal aus einer Betätigung eines Bedienelementes einer Bedienvorrichtung der Arbeitsmaschine resultieren, welches der Ansteuerung zumindest eines Arbeitsaggregates und/oder zumindest eines Nebenverbrauchers dient. Insbesondere das Ausführen eines Arbeitsvorganges oder eines einzelnen Arbeitsschrittes durch ein Arbeitsaggregat oder einen Nebenverbraucher wird durch die Betätigung eines Bedienelementes einer Bedienvorrichtung der Arbeitsmaschine mittelbar oder unmittelbar initiiert. Dies führt im Allgemeinen zu einer sprunghaften Erhöhung der Motorlast. Durch das Übermitteln des Signals zur Ansteuerung eines Arbeitsaggregates oder eines Nebenverbrauchers an die Kontrollvorrichtung, ist diese über die Art des Arbeitsvorgangs bzw. des Arbeitsschrittes informiert. Anhand dieser Information kann die Kontrollvorrichtung unter Berücksichtigung des zu erwartenden Lastanstieges die betriebszustandsspezifische Zeitverzögerung bestimmen und damit verbunden den Zeitpunkt, zu welchem das Motorsteuergerät anzusteuern ist, um den erforderlichen Ladedruck für den Antriebsmotor als Reaktion auf den vorhergesehenen Lastanstieg bereitzustellen.

Des Weiteren kann die Kontrollvorrichtung zur Auswertung eines von zumindest einer Sensoreinrichtung der Arbeitsmaschine bereitgestellten Sensorsignals eingerichtet sein, welches der Generierung des Steuersignals für das Motorsteuergerät dient. Ein Sensorsignal, welches zur Generierung des Steuersignals herangezogen wird, kann beispielsweise von einer als Neigungssensor ausgeführten Sensoreinrichtung der Arbeitsmaschine bereitgestellt werden, um eine Neigung des befahrenen Untergrunds zu bestimmen. Eine weitere Sensoreinrichtung der Arbeitsmaschine kann als ein GPS-Sensor ausgebildet sein. Die Positionsbestimmung der Arbeitsmaschine ermöglicht es, vorausschauend auf bevorstehende Ereignisse reagieren zu können, beispielsweise wenn mit dem Erreichen eines zu bearbeitenden Schlages das bevorstehende Ende einer Straßenfahrt absehbar ist. Bei landwirtschaftlichen Arbeitsmaschinen mit einer Reifendruckregelanlage als einem Nebenverbraucher kann manuell durch eine Bedienperson initiiert oder automatisiert eine Anpassung des Reifendrucks erfolgen, was mit einer Laständerung des Antriebsmotors einhergeht.

Gemäß einer bevorzugten Weiterbildung kann die Kontrollvorrichtung dazu eingerichtet sein, wiederkehrend durchzuführende Sequenzen landwirtschaftlicher Arbeitsvorgänge oder Prozesse aufzuzeichnen und hinsichtlich auftretender Laständerungen, die eine sprunghafte Erhöhung der Motorlast bedingen, auszuwerten. Wiederkehrende Sequenzen sind insbesondere Fahrten der Arbeitsmaschine im Vorgewende und damit verbundene Vorgänge, die das Betätigen des zumindest einen Arbeitsaggregates und/oder des zumindest einen Nebenverbrauchers betreffen. Mit dem Erreichen des Vorgewendes wird im Allgemeinen ein als Anbau- oder Vorsatzgerät ausgeführtes Arbeitsaggregat temporär in eine Position zum Feldboden beabstandete Position überführt, um eine Kehre durchzuführen. Das temporäre Überführen erfolgt zu dem Zeitpunkt, zu dem das Ende des zu bearbeitenden Feldes durch das Anbau- oder Vorsatzgerät erreicht wird. Zur Entlastung einer Bedienperson lassen sich die hierfür notwendigen Schritte des Anhebens unmittelbar vor dem Verlassen und des Absenkens bei einem Wiedereintritt in den zu bearbeitenden Bereich des Feldes aufzeichnen und wenigstens einem Bedienelement der Bedienvorrichtung der Arbeitsmaschine abrufbar zuordnen.

Insbesondere kann die Kontrollvorrichtung dazu eingerichtet sein, ein spezifisches Ansprechverhaltens des Antriebsmotors bei den jeweiligen Ausgangs- und Ziel-Betriebspunkten zu berücksichtigen. Die Kontrollvorrichtung kann dabei den jeweils vorliegenden aktuellen Lastzustand des Antriebsmotors berücksichtigen, um die zeitliche Ansteuerung der Ladedruckerhöhung zu verbessern. Ausgehend von einem niedrigen Last- bzw. Drehzahlniveau als Ausgangspunkt bedarf es einer größeren betriebszustandsspezifischen Zeitverzögerung als bei einem hohen Drehzahlniveau als Ausgangspunkt. Ebenso kann der Einfluss des Abstands zwischen dem Ausgangs-Betriebspunkt und dem Ziel-Betriebspunkt berücksichtigt werden.

Besonders vorteilhaft ist es, wenn die übergeordnete Kontrollvorrichtung eine Bedienvorrichtung (Bedienterminal) und/oder eine Steuervorrichtung der Arbeitsmaschine ist, welche eine automatisierte und/oder manuelle Einstellung oder Aktivierung von laständernden Betriebszuständen ermöglicht. Landwirtschaftliche Arbeitsmaschinen weisen üblicherweise eine in einer Kabine angeordnete Bedienvorrichtung auf, mittels der eine Bedienperson der Arbeitsmaschine Arbeitsvorgänge oder Prozesse initiiert und überwacht. Hierzu kann Bedienvorrichtung als ein Bedienterminal ausgeführt sein, welches zumindest eine grafische Benutzeroberfläche aufweist. Dabei kann die grafische Benutzeroberfläche als berührungssensitiver Bildschirm ausgeführt sein, so dass Eingaben unmittelbar durch den Bildschirm ausführbar sind. Zusätzlich kann die Bedienvorrichtung weitere Bedienelemente umfassen, welche als Schalter, Taster oder dergleichen ausgebildet sind. Diese können wiederum an einem sogenannten Multifunktionsgriff oder einer Bedienkonsole im Inneren der Kabine angeordnet sein.

Weiterhin betrifft die vorliegende Erfindung ein Verfahren zum Betreiben einer landwirtschaftlichen Arbeitsmaschine gemäß dem unabhängigen Anspruch 10.

Gemäß dem Anspruch 10 wird ein Verfahren zum Betreiben einer landwirtschaftlichen Arbeitsmaschine, insbesondere eines Traktors, mit einem Antriebsstrang, umfassend einen drehzahlgeregelten Antriebsmotor, wenigstens ein Getriebe sowie zumindest eine Antriebsachse und zumindest eine Nebenabtriebswelle, zum Betreiben der Arbeitsmaschine und zumindest eines Arbeitsaggregates zur Durchführung oder Unterstützung landwirtschaftlicher Arbeitsvorgänge oder Prozesse, vorgeschlagen. Eine Regelung von Betriebsparametern des Antriebsmotors wird durch ein Motorsteuergerät durchgeführt. Erfindungsgemäß wird ein Betriebszustand, welcher eine sprunghafte Erhöhung der Motorlast bedingt, durch eine übergeordnete Kontrollvorrichtung vorerkannt und/oder ausgelöst. Dabei wird in Abhängigkeit von einem Last-Schwellwert eine betriebszustandsspezifische Zeitverzögerung durch die Kontrollvorrichtung bestimmt, und es wird jeweils rechtzeitig, d.h. zu einem der durch die Kontrollvorrichtung bestimmten betriebszustandsspezifischen Zeitverzögerung vorauseilenden Zeitpunkt, ein Steuersignal zur entsprechenden Ladeerhöhung an das Motorsteuergerät gegeben. Durch das Verfahren werden ein stabileres Motordrehzahlregelverhalten und ein verbessertes Ansprechverhalten des Antriebsmotors ermöglicht. Eine Optimierung in diese Richtung bedeutet ein stabileres Motordrehzahlregelverhalten, insbesondere einen geringeren Drehzahleinbruch. Der Antriebsmotor macht dadurch einen agileren Eindruck auf den Fahrer. Durch die frühzeitige Erhöhung des Ladedrucks kann die Reaktion auf den Lastsprung mit einer geringeren bzw. keiner Rauchlimitierung ausgeführt werden.

Dabei kann die betriebszustandsspezifische Zeitverzögerung in Abhängigkeit von jeweils einer Mehrzahl an Parametern bestimmt werden. So können sowohl die Art eines Arbeitsvorgangs, ein jeweiliger Arbeitsschritt, ein Betriebsparameter, beispielsweise ein regelbarer Reifendruck, und/oder Umweltparameter, wie die Bodenbeschaffenheit, einen Einfluss auf die Motorlast haben. Diese Parameter sind dafür maßgeblich, mit welchem zeitlichen Vorlauf das Steuersignal von der Kontrollvorrichtung an das Motorsteuergerät gesandt werden muss, bevor die erkannte Betriebszustandsänderung durch die Kontrollvorrichtung initiiert werden kann.

Die vorliegende Erfindung wird nachstehend anhand eines in den Zeichnungen dargestellten Ausführungsbeispieles näher erläutert.

Es zeigen:
- Fig. 1: eine schematische Ansicht einer landwirtschaftlichen Arbeitsmaschine;
- Fig. 2: eine schematische Darstellung einer übergeordneten Kontrollvorrichtung der Arbeitsmaschine; und
- Fig. 3: ein Flussdiagramm zur Veranschaulichung eines Verfahrens zum Betreiben der Arbeitsmaschine.

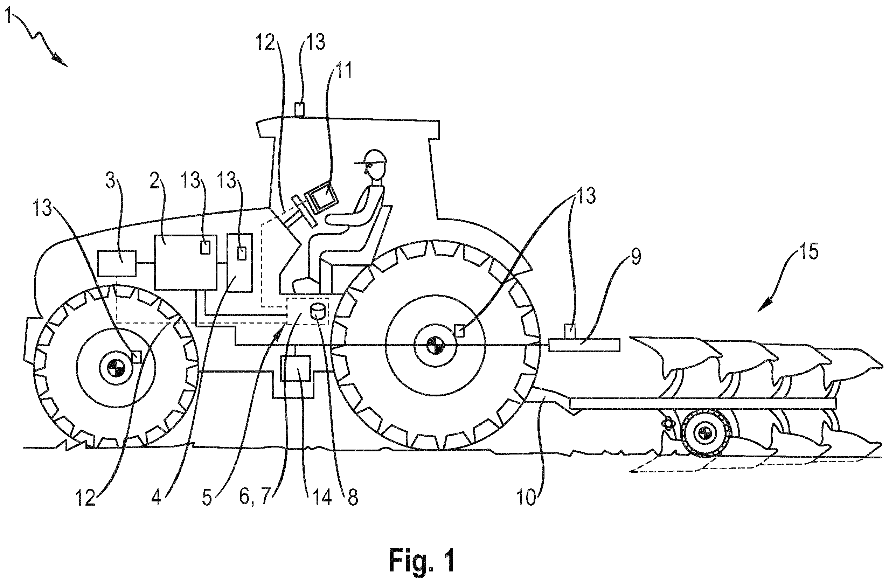

In Fig. 1 ist eine landwirtschaftliche Arbeitsmaschine 1, hier in Form eines Traktors, mit einem Antriebsstrang, umfassend einen drehzahlgeregelten Antriebsmotor 2 und wenigstens ein Getriebe 3, zum Betreiben der Arbeitsmaschine 1 und zum Betreiben zumindest eines Arbeitsaggregates 15, bei dem es sich hier beispielhaft um einen am Heckkraftheber 10 angeordneten Pflug handelt, zur Durchführung oder Unterstützung landwirtschaftlicher Prozesse, hier eine Bodenbearbeitung, dargestellt. Die landwirtschaftliche Arbeitsmaschine 1 weist zumindest eine Steuerungsvorrichtung 5 auf, die mittels einer Erfassungseinrichtung 6, die verschiedene Sensoreinrichtungen 13 aufweist, unterschiedliche Betriebsparameter der Arbeitsmaschine 1 und/oder des zumindest einen Arbeitsaggregates 15 erfassen kann. Die Sensoreinrichtungen 13 können, um nur einige Beispiele zu nennen, dazu dienen, das abgegebene Antriebsdrehmoment des Antriebsmotors 2 der landwirtschaftlichen Arbeitsmaschine 1, die Drehzahl an der Antriebswelle des Antriebsmotors 2, eine oder mehrere Abtriebsdrehzahlen des Getriebes 4, die Fahrgeschwindigkeit, die Drehzahl an einer front- und/oder heckseitig angeordneten Nebenabtriebswelle 9, eine Neigung der Arbeitsmaschine 1, eine geografische Position der Arbeitsmaschine 1 etc. zu erfassen. Neben einer automatischen Erfassung von Betriebsparametern mittels einer Sensoreinrichtung 13 ist es auch denkbar, Betriebsparameter durch Berechnung aus sensorisch erfassten Betriebsparametern, zum Beispiel die abgegebene Antriebsleistung aus Antriebsdrehmoment und Drehzahl, zu erhalten, wozu die Steuerungsvorrichtung 5 eine Recheneinrichtung 7 umfasst, und/oder Betriebsparameter manuell einzugeben und/oder auszuwählen, wozu die Steuerungsvorrichtung 5 insbesondere eine mit einer Anzeigevorrichtung 17, vorzugsweise in Form eines Touchscreens, ausgeführte Bedienvorrichtung 11 aufweist. Die Bedienvorrichtung 11 umfasst insbesondere weitere Bedienelemente 18, wie Taster, Schalter und zumindest einen Multifunktionshebel, welche an einer nicht dargestellten Konsole angeordnet sind.

Die Steuerungsvorrichtung 5 der landwirtschaftlichen Arbeitsmaschine 1 weist ferner eine Datenbank 8 auf, welche in der Recheneinrichtung 7 enthalten ist, in der die von einer Sensoreinrichtung 13 sowie der Recheneinrichtung 7 bestimmen Betriebsparameter abrufbar hinterlegt sind.

Zum Betreiben des Heckkrafthebers 10 sowie anderer hydraulischer Nebenverbraucher des Traktors 1 oder anderen an diesen anschließbaren Nebenverbrauchern ist zumindest eine als Hydraulikpumpe ausgeführter Nebenverbraucher 14 vorgesehen, welcher von dem Antriebsmotor 2 angetrieben wird. Darüber hinaus kann eine landwirtschaftliche Arbeitsmaschine mit einem hydrostatischen Fahrantrieb versehen sein, wie dies beispielsweise bei selbstfahrenden Erntemaschinen wie einem Mähdrescher oder Feldhäcksler der Fall ist.

Die Steuerungsvorrichtung 5 bildet im dargestellten Ausführungsbeispiel zusammen mit der Bedienvorrichtung 11 eine übergeordnete Kontrollvorrichtung 16 der Arbeitsmaschine 1, welche unter anderem der Ansteuerung des zumindest einen Arbeitsaggregates 15, der Nebenabtriebswelle 9, des Heckkrafthebers 10, der Hydraulikpumpe 14 und anderer Nebenverbraucher des Traktors 1 dient. Die Kontrollvorrichtung 16 bildet eine der Steuerung bzw. Regelung des Traktors 1 dienende Einheit, in welcher alle Informationen, Daten sowie Sensorsignale zusammengeführt werden, um den jeweiligen Betriebszustand des Traktors 1 zu koordinieren. Alternativ kann die Die Kontrollvorrichtung 16 neben einer zentralen Steuerungsvorrichtung zum Einsatz kommen, welche die Koordination des jeweiligen Betriebszustandes des Traktors 1 vornimmt. In diesem Fall kann die Kontrollvorrichtung 16 eine nebengeordnete Einheit sein, welche an ein Bussystem 12 des Traktors 1 angeschlossen ist.

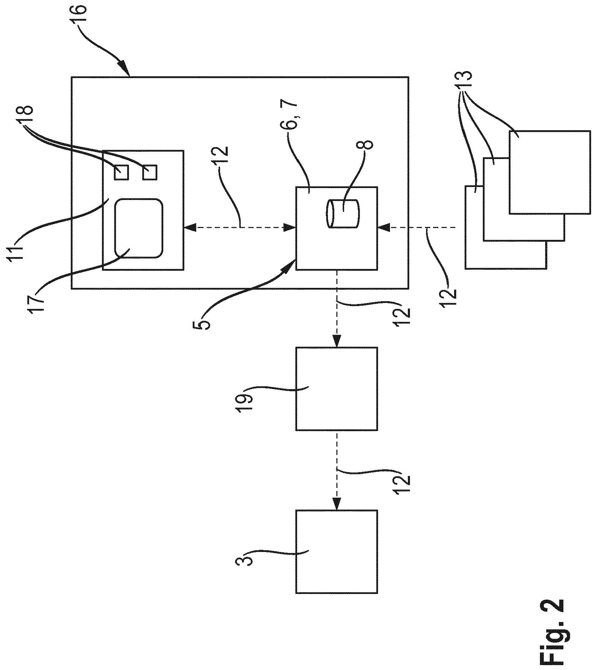

In Fig. 2 ist schematisch die Kontrollvorrichtung 16 und die mit dieser durch das Bussystem 12 verbundene Bedienvorrichtung 11 dargestellt. Denkbar ist jedoch auch, dass die Kontrollvorrichtung als eine separate Einheit ausgebildet ist, die mit der Steuerungsvorrichtung 5 der Arbeitsmaschine 1 signaltechnisch verbunden ist. Die Bedienvorrichtung 11 umfasst die Anzeigevorrichtung 17 sowie die Bedienelemente 18. Die Kontrollvorrichtung 16 ist durch eine Kommunikationsschnittstelle 19 mit der Motorsteuerung 3 verbunden. Die Kommunikationsschnittstelle 19 dient der Übertragung eines Steuersignals von der übergeordneten Kontrollvorrichtung 16 an das Motorsteuergerät 3. Die Kommunikationsschnittstelle 19 kann separat oder als Bestandteil der Kontrollvorrichtung 16 bzw. des Motorsteuergerätes 3 ausgeführt sein.

Mittels der Bedienelemente 18 lassen sich verschiedene Betriebszustände der Arbeitsmaschine 1 einstellen. Beispielhaft hierfür sei das Absenken und Einziehen des als Pflug ausgebildeten Arbeitsaggregates 15 in den Boden genannt. Mittels eines der Bedienelemente 18 lässt sich der Heckkraftheber 10 ansteuern, um das Arbeitsaggregat 15 abzusenken. Die hierbei auftretende Last führt zu einer dynamischen Änderung des von dem Antriebsmotor 2 über die Kurbelwelle abzugebenden Drehmoments. Diese dynamischen Lasten kann als Störgröße für den Drehzahlregelkreis des Motorsteuergeräts 3 angesehen werden, da der Antriebsmotor 2 im genannten Beispiel schlagartig mehr Motormoment abgeben muss, um die Drehzahl zu halten. Das abgebbare Motormoment wird durch die so genannte Rauchgrenze und damit durch den Ladedruck des Motors begrenzt. Zunächst muss Ladedruck aufgebaut werden, um das maximale Motormoment bereitstellen zu können. Der Aufbau des Ladedrucks wird bei einem als Dieselmotor ausgebildeten Antriebsmotor 2 aktiv geregelt, wozu oftmals ein mittels Wastegate-Ventils im Abgasstrom geregelter Turbolader oder ein Turbolader mit variabler Turbinengeometrie zum Einsatz kommen. Trotz der aktiven Regelung stellt der Aufbau des Ladedrucks einen langsam ablaufenden Prozess und damit die größte Einschränkung im Drehzahlregelkreis dar. Insbesondere weil erst eine Drehzahldifferenz vorliegen muss, bevor das Motorsteuergerät aktiv die Ladedruckerhöhung einleiten kann. Dies hat letztendlich zur Folge, dass bei einer sprunghaften Lastaufprägung am drehzahlgeregelten Antriebsmotor 2 die Drehzahl stark einbricht oder der Antriebsmotor 2 sogar abgewürgt wird.

Um das Ansprechverhalten des Antriebsmotors 2 bei auftretender dynamischer Lastzunahme, wie dem Absenken und Einziehen des als Pflug ausgebildeten Arbeitsaggregates 15 in den Boden zu verbessern, ist vorgesehen, dass die übergeordnete Kontrollvorrichtung 16 derart ausgebildet und eingerichtet ist, dass mittels der Kontrollvorrichtung 16 ein Betriebszustand der Arbeitsmaschine 1, welcher eine sprunghafte Erhöhung der Motorlast bedingt, im Voraus erkannt und/oder ausgelöst wird und in Abhängigkeit von einem Last-Schwellwertes eine betriebszustandsspezifische Zeitverzögerung bestimmt wird, um jeweils rechtzeitig, d.h. der betriebszustandsspezifischen Zeitverzögerung vorauseilend, ein Steuersignal zur entsprechenden Ladedruckerhöhung an das Motorsteuergerät 3 zu geben. Die Kommunikationsschnittstelle 19 ermöglicht es der übergeordneten Kontrollvorrichtung 16 dem Motorsteuergerät 3 mittels des Steuersignals mitzuteilen, dass eine rapide Lastzunahme unmittelbar bevorsteht. Dies ermöglicht es wiederum dem Motorsteuergerät 3 durch eine entsprechende Ansteuerung frühzeitig den Ladedruck in einer Weise zu erhöhen, dass die Reaktion auf den Lastsprung mit einer geringeren bzw. keiner Rauchlimitierung ausgeführt werden kann.

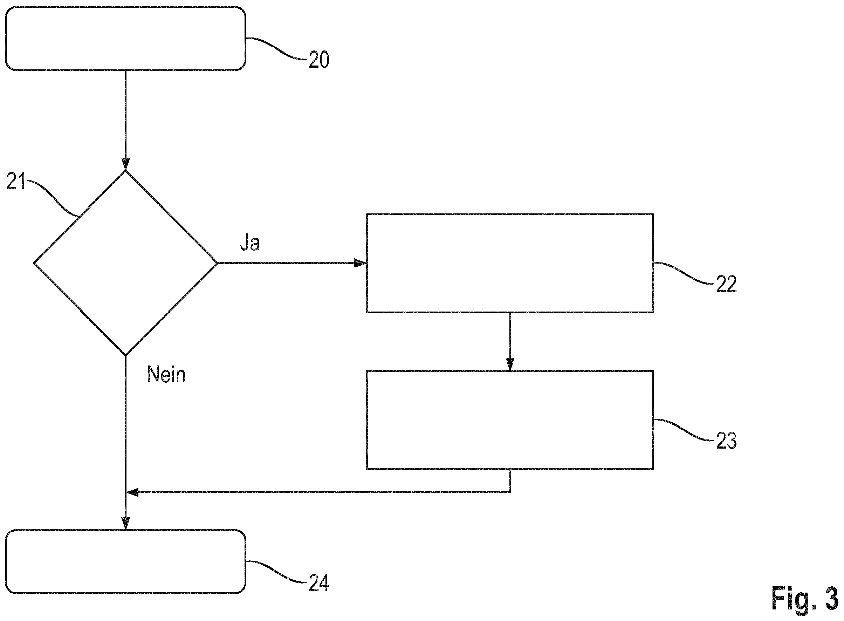

Die Darstellung In Fig. 3 zeigt ein vereinfachtes Flussdiagramm zur Veranschaulichung des Verfahrens zum Betreiben der Arbeitsmaschine 1, welchem die Ansteuerung des Motorsteuergerätes 3 durch die übergeordnete Kontrollvorrichtung 16 zugrunde liegt.

Im Schritt 20 wird eine laständernde Betriebszustandsänderung der Arbeitsmaschine 1 durch die übergeordnete Kontrollvorrichtung 16 detektiert. Eine Änderung des Betriebszustands kann dabei eine kurzzeitige und/oder länger andauernde Erhöhung der Motorlast bedingen. Neben der beispielhaft angeführten Betätigung des Heckkrafthebers 10 können das Zuschalten der zumindest einen Nebenabtriebswelle 9 oder eines Nebenverbrauchers wie der Hydraulikpumpe 14 oder einer Reifendruckregelanlage eine kurzzeitige und/oder länger andauernde Erhöhung der Motorlast bedingen Das Erkennen der Betriebszustandsänderung durch die Kontrollvorrichtung 16 kann anhand einer manuellen Betätigung der Bedienvorrichtung 11 durch eine Bedienperson, mit der eine Betriebszustandsänderung angefordert wird, und /oder durch die Auswertung von Sensorsignalen einer oder mehrerer der Sensoreinrichtungen 13 erfolgen. Die Kontrollvorrichtung 16 reagiert auf die manuelle Betätigung der Bedienvorrichtung 11 in Form einer Betriebszustandsänderung, beispielsweise durch das Anheben oder das Absenken und Einziehen des Arbeitsaggregates 15. Der für die Durchführung dieser Betriebszustandsänderung erforderliche Zeitraum ist, im direkten Vergleich mit der hierfür erforderlichen Anpassung des Ladedrucks des Antriebsmotors 2 durch das Motorsteuergerät 3, sehr kurz.

Im Schritt 21 wird die aus der bevorstehenden Betriebszustandsänderung resultierende Motorlast mit einem Lastschwellwert verglichen. Dies dient dazu, zwischen verschiedenen, von der Kontrollvorrichtung 16 erkannten Betriebszustandsänderungen hinsichtlich der zu erwartenden Motorlast unterscheiden zu können. Bezogen auf das Beispiel des als Pflug ausgebildeten Arbeitsaggregates 15 bedeutet das im Fall des Anhebens, dass der Lastschwellwert nicht überschritten wird. Somit wird zum Schritt 24 gesprungen und das Verfahren endet.

Hingegen führt die bevorstehende Betriebszustandsänderung des Absenkens und Einziehens des Arbeitsaggregates 15 in den Boden zu einer sprunghaften Erhöhung der Motorlast, so dass der Lastschwellwert überschritten wird. In diesem Fall wird zum Schritt 22 übergegangen.

Im Schritt 22 wird in Kenntnis der Art der laständernden Betriebszustandsänderung eine individuelle betriebszustandsspezifische Zeitverzögerung durch die Kontrollvorrichtung 16 bestimmt. Diese betriebszustandsspezifische Zeitverzögerung entspricht im Wesentlichen dem Zeitraum, der erforderlich ist, damit das Motorsteuergerät 3 den Ladedruck auf das für die Drehzahlerhöhung des Antriebsmotors 2 erforderliche Druckniveau erhöhen kann. Dabei erfolgt eine Berücksichtigung des spezifischen Ansprechverhaltens (Trägheit) des Antriebsmotors 2 bei den jeweiligen Ausgangs- und Ziel-Betriebspunkten, da hierdurch eine verbesserte zeitliche Ansteuerung der Drehzahlerhöhung ermöglicht werden kann. Informationen zum Ausgangsbetriebspunkt liegen der Kontrollvorrichtung 16 vor, soweit sie durch Eingriffe der Bedienperson, d.h. Betätigung der Bedienelemente 17, 18 der Bedienvorrichtung 11 bedingt sind. Weitere Informationen zum Ausgangsbetriebspunkt bestimmt die Kontrollvorrichtung 16 durch die Auswertung der Sensorsignale der Sensoreinrichtungen 13 sowie durch den Empfang von Daten des Motorsteuergerätes 3.

Im nachfolgenden Schritt 23 wird von der Kontrollvorrichtung 16 ein Steuersignal an das Motorsteuergerät 3 übermittelt, um die Ladedruckerhöhung einzuleiten. Nach dem Übermitteln des Steuersignals an das Motorsteuergerät 3 verzögert die Kontrollvorrichtung 16 entsprechend für die Dauer der betriebszustandsspezifischen Zeitverzögerung das Ansteuern des Arbeitsaggregates 15, bevor die angeforderte Betriebszustandsänderung umgesetzt wird. Anschließend wird zum Schritt 24 übergegangen und das Verfahren endet.

Einen Einfluss auf die Motorlast können dabei sowohl die Art des Arbeitsvorgangs, ein jeweiliger Arbeitsschritt, ein Betriebsparameter, wie ein regelbarer Reifendruck, und/oder Umweltparameter wie die Bodenbeschaffenheit haben. Die betriebszustandsspezifische Zeitverzögerung kann dabei jeweils von einer Mehrzahl an Parametern abhängig sein.

### Bezugszeichenliste

- 1: Traktor
- 2: Antriebsmotor
- 3: Motorsteuergerät
- 4: Getriebe
- 5: Steuerungsvorrichtung
- 6: Erfassungsvorrichtung
- 7: Recheneinrichtung
- 8: Datenbank
- 9: Nebenabtriebswelle
- 10: Heckkraftheber
- 11: Bedienvorrichtung
- 12: Bussystem
- 13: Sensoreinrichtung
- 14: Nebenverbraucher
- 15: Arbeitsaggregat
- 16: Kontrollvorrichtung
- 17: Anzeigevorrichtung
- 18: Bedienelement
- 19: Kommunikationsschnittstelle
- 20: Schritt
- 21: Schritt
- 22: Schritt
- 23: Schritt
- 24: Schritt

## Patentansprüche

1. Landwirtschaftliche Arbeitsmaschine (1), insbesondere Traktor, mit einem Antriebsstrang, umfassend einen drehzahlgeregelten Antriebsmotor (2), wenigstens ein Getriebe (4) sowie zumindest eine Antriebsachse und zumindest eine Nebenabtriebswelle (9), zum Betreiben der Arbeitsmaschine (1) und zumindest eines Arbeitsaggregates (15) zur Durchführung oder Unterstützung landwirtschaftlicher Arbeitsvorgänge oder Prozesse, sowie einem Motorsteuergerät (3) zur Regelung von Betriebsparametern des Antriebsmotors (2), **dadurch gekennzeichnet, dass** die landwirtschaftliche Arbeitsmaschine (1) eine mit dem Motorsteuergerät (3) verbundene übergeordnete Kontrollvorrichtung (16) aufweist, welche derart ausgebildet und eingerichtet ist, um mittels der Kontrollvorrichtung (16) einen Betriebszustand der Arbeitsmaschine (1), welcher eine sprunghafte Erhöhung der Motorlast bedingt, im Voraus zu erkennen und/oder auszulösen und in Abhängigkeit eines Last-Schwellwertes eine betriebszustandsspezifische Zeitverzögerung zu bestimmen, und jeweils rechtzeitig ein Steuersignal zur entsprechenden Ladedruckerhöhung an das Motorsteuergerät (3) zu geben.

2. Landwirtschaftliche Arbeitsmaschine (1) nach Anspruch 1, **dadurch gekennzeichnet, dass** zur Verbindung des Motorsteuergerätes (3) mit der übergeordneten Kontrollvorrichtung () eine Kommunikationsschnittstelle (19) vorgesehen ist.

3. Landwirtschaftliche Arbeitsmaschine (1) nach Anspruch 1 oder 2, **dadurch gekennzeichnet, dass** die Kontrollvorrichtung (16) dazu eingerichtet ist, ein an die Kontrollvorrichtung (16) übermitteltes Signal, welches der Ansteuerung eines Arbeitsaggregates (15) zur Ausführung eines Arbeitsvorganges oder Prozesses dient, zur Generierung und anschließenden Übermittlung des Steuersignals an das Motorsteuergerät (3) zu verwenden.

4. Landwirtschaftliche Arbeitsmaschine (1) nach einem der Ansprüche 1 bis 3, **dadurch gekennzeichnet, dass** die Kontrollvorrichtung (16) dazu eingerichtet ist, ein an die Kontrollvorrichtung (16) übermitteltes Signal, welches der Ansteuerung eines Nebenverbrauchers (14) der Arbeitsmaschine (1) dient, zur Generierung und anschließenden Übermittlung des Steuersignals an das Motorsteuergerät (3) zu verwenden.

5. Landwirtschaftliche Arbeitsmaschine (1) nach einem der vorangehenden Ansprüche, **dadurch gekennzeichnet, dass** das an die Kontrollvorrichtung (16) übermittelte Signal aus einer Betätigung eines Bedienelementes (17, 18) einer Bedienvorrichtung (11) der Arbeitsmaschine (1) resultiert.

6. Landwirtschaftliche Arbeitsmaschine (1) nach einem der vorangehenden Ansprüche, **dadurch gekennzeichnet, dass** die Kontrollvorrichtung (16) zur Auswertung eines von zumindest einer Sensoreinrichtung (13) der Arbeitsmaschine (1) bereitgestellten Sensorsignals eingerichtet ist, welches der Generierung des Steuersignals für das Motorsteuergerät (3) dient.

7. Landwirtschaftliche Arbeitsmaschine (1) nach einem der vorangehenden Ansprüche, **dadurch gekennzeichnet, dass** die Kontrollvorrichtung (16) dazu eingerichtet ist, wiederkehrend durchzuführende Sequenzen landwirtschaftlicher Arbeitsvorgänge oder Prozesse aufzuzeichnen und hinsichtlich auftretender Laständerungen, die eine sprunghafte Erhöhung der Motorlast bedingen, auszuwerten.

8. Landwirtschaftliche Arbeitsmaschine (1) nach einem der vorangehenden Ansprüche, **dadurch gekennzeichnet, dass** die Kontrollvorrichtung (16) dazu eingerichtet ist, ein spezifisches Ansprechverhaltens des Antriebsmotors (2) bei den jeweiligen Ausgangs- und Ziel-Betriebspunkten zu berücksichtigen.

9. Landwirtschaftliche Arbeitsmaschine (1) nach einem der vorangehenden Ansprüche, **dadurch gekennzeichnet, dass** die übergeordnete Kontrollvorrichtung (16) eine Bedienvorrichtung (11) und/oder eine Steuervorrichtung (5) der Arbeitsmaschine (1) ist, welche eine automatisierte und/oder manuelle Einstellung oder Aktivierung von laständernden Betriebszuständen ermöglicht.

10. Verfahren zum Betreiben einer landwirtschaftlichen Arbeitsmaschine (1), insbesondere Traktor, mit einem Antriebsstrang, umfassend einen drehzahlgeregelten Antriebsmotor (2), wenigstens ein Getriebe (4) sowie zumindest eine Antriebsachse und zumindest eine Nebenabtriebswelle (9), zum Betreiben der Arbeitsmaschine (1) und zumindest eines Arbeitsaggregates (15) zur Durchführung oder Unterstützung landwirtschaftlicher Arbeitsvorgänge oder Prozesse, wobei eine Regelung von Betriebsparametern des Antriebsmotors (2) durch ein Motorsteuergerät (3) durchgeführt wird, **dadurch gekennzeichnet, dass** ein Betriebszustand, welcher eine sprunghafte Erhöhung der Motorlast bedingt, durch eine übergeordnete Kontrollvorrichtung (16) vorerkannt und/oder ausgelöst (20) wird, und in Abhängigkeit von einem Last-Schwellwert eine betriebszustandsspezifische Zeitverzögerung durch die Kontrollvorrichtung bestimmt wird (22), und jeweils rechtzeitig ein Steuersignal zur entsprechenden Ladedruckerhöhung an das Motorsteuergerät gegeben wird (23).

11. Verfahren nach Anspruch 10, **dadurch gekennzeichnet, dass** die betriebszustandsspezifische Zeitverzögerung in Abhängigkeit von jeweils einer Mehrzahl an Parametern bestimmt wird.
